# EUROPÄISCHE PATENTANMELDUNG

(11) **EP 3 448 000 A1**
(43) Veröffentlichungstag der Anmeldung: **27.02.2019**
(21) Anmeldenummer: 17187473.8
(22) Anmeldetag: 23.08.2017
(51) Int. Cl.: H04L 29/12

(54) **VERFAHREN ZUM GENERIEREN EINES EINDEUTIGEN ADRESSIERUNGSKENNERS FÜR EINEN DATENSTROM VON EINER APPLIKATION, IN EINEM TSN KONFORMEN NETZWERK UND VORRICHTUNG HIERZU**

(71) Anmelder: Siemens Aktiengesellschaft, 80333 München (DE)
(72) Erfinder: Albrecht, Harald, 90475 Nürnberg (DE); Höme, Stephan, 91126 Schwabach (DE); Talanis, Thomas, 91336 Heroldsbach (DE)

(57) **Zusammenfassung**

Zusammengefasst wird in der vorliegenden Anmeldung folgendes vorgeschlagen:
• ein Stream End Manager (SEM) in End-Stationen zur dezentralen Verwaltung von Stream-Enden,
• ein DNS TSN-Informationsmodell, das die Abbildung von TSN Stream-Namen auf TSN Stream-IDs mit Mitteln des DNS ermöglicht.
• ein Stream Information Service (SIS), der die Registrierung und das Nachschlagen von Stream IDs anhand von Stream Names durchführt.
• ein Stream Name Construction Service (SNCS) zum Bilden hierarchisch eindeutiger Stream-Namen auf der Basis von DNS FQDNs.

Das vorgeschlagene Vorgehen bietet folgende Vorteile
• flexible ad-hoc Autokonfiguration der TSN-Stream-IDs in verteilten und modularen TSNApplikationen.
• unterstützt den Serien-Maschinenbau.
• kein zentrales Planungstool für die Netzwerk-Planung erforderlich.
• keine zentrale Planung der Stream-IDs (und der Stream-Namen) erforderlich.
• dezentrales Erzeugen eindeutiger TSN Stream-IDs, so dass kein zentraler
Belegungsmechanismus erforderlich ist.
• Mit-Verwendung eines bereits existierenden Namensdienstes (DNS, mDNS), so dass
nicht erst ein neuer Dienst entwickelt werden muss.

## Beschreibung

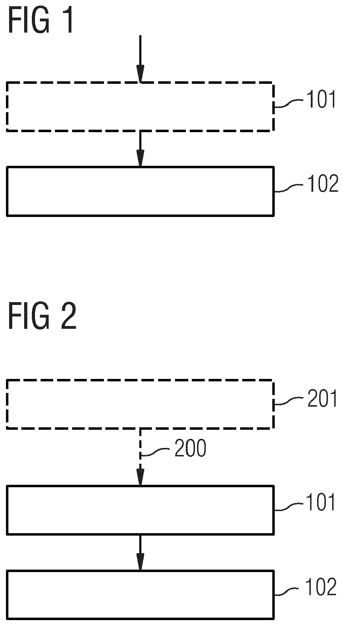

Der IEEE 802.1-Standard TSN (Time Sensitive Networks) bietet eine gesicherte Dienstqualität (QoS, Quality of Service) bei der Datenübertragung in IEEE 802.1 (TSN, Time Sensitive Net-working)-kompatiblen LANs in Form sogenannter Streams. Hierbei identifizieren, wie in Figur 1 schematisch dargestellt, Applikationen gegenüber TSN (genauer: die "TSN Control Plane", Steuer- oder Kontrollschicht) die einzelnen Streams über sogenannte Stream-IDs, 101 (Stream Identifier). Dieses sind aus Sicht von TSN 64bit-lange Bit-Strings ohne innere Struktur. Die TSN Control Plane greift auf die TSN Data Plane (Datenschicht) zu, (DATA, Video, ...) 102.

Diese Stream-IDs sind in der TSN-Architektur bewusst mit lediglich 64 Bit kurz gewählt, weil aus technischen Gründen jeweils alle Stream-IDs in allen TSN-Bridges innerhalb eines TSN-LANs bekannt sein müssen. Längere Stream-IDs sprengen rasch das Speicherbudget in TSN-Bridges. In der Folge unterliegen TSN Stream-IDs einer Mangel-Verwaltung - analog zur Mangelverwaltung von IPv4-Adressen in Subnetzen (wie beispielsweise bei den heute oftmals üblichen maskierten /24 Subnetzen, also unter Verwendung der Netzmaske 255.255.255.0).

Eine mögliche Vorgehensweise im Umgang mit der Stream-ID-Mangelverwaltung bei TSN ist die manuelle Durchführung der Verwaltung von Stream-IDs manuell mittels einer Tabelle, beispielsweise in Excel oder einem anderen Tool. Der Einfachheit halber sind hierbei Engineering-Werkzeuge unter dieser "manuellen Verwaltung" mit erfasst. Diese Methode ist einfach und hat sich praktisch bewährt.

Problematisch ist jedoch, dass diese Methode grundsätzlich nicht skaliert, insbesondere nicht in der diskreten Fertigungsindustrie mit den häufig anzutreffenden Zulieferhierarchien.

Alternativ kommt eine dezentrale, automatische Verwaltung von Stream-IDs im Betrieb in Frage, so dass neue TSN-Applikationen einfach per Plug&Play hinzugefügt werden können, ohne dass eine erneute Gesamtplanung der Stream-IDs erforderlich wird.

Für einen möglichst einfachen, flexiblen und robusten TSN-Betrieb wünschen sich Anwender eine dezentrale und automatische Verwaltung von Stream-Ids, dieses ist auch bekannt unter dem Begriff "effortless (müheloses) TSN".

Es ist Aufgabe der Erfindung, ein Verfahren anzugeben dass die oben genannten Probleme löst.

Die Aufgabe wird gelöst durch ein Verfahren mit den Merkmalen gemäß dem Patentanspruch 1.
Die Aufgabe wird weiterhin gelöst durch eine Vorrichtung mit den Merkmalen gemäß dem Patentanspruch 7.

Bei dem Verfahren zum Generieren eines eindeutigen Adressierungskenners für einen Datenstrom von einer in einem Endgerät laufenden Applikation, in einem TSN konformen Netzwerk gemäß dem Standard IEEE 802.1 wird dezentral in diesem Endgerät, der Adressierungskenner bestehend zumindest aus einer ersten Information mit Bezug zur Applikation und einer zweite Information mit Bezug auf den Datenstrom, erzeugt, wobei der Adressierungskenner nach Generierung eine StreamID zugewiesen wird und eine Information enthaltend den Adressierungskenner und die StreamID an einen zentralen Adress-Verwaltungs-Knoten gemeldet wird um den Adressierungskenner abzufragen und zu registrieren, sofern die Kombination noch nicht vergeben war.

Weitere Ausführungsformen sind durch die Gegenstände der Unteransprüche angegeben.

Die folgenden Aspekte werden im Folgenden betrachtet:
1. Ein dezentraler, verteilter und synchronisationsloser Zuteilungsmechanismus für TSN Stream-IDs.
2. Ein Registrierungs- und Nachschlage-Mechanismus, der applikationsseitige "Stream-Namen" auf die TSN-seitigen "Stream-IDs" abbildet.
3. Ein dezentraler, verteilter und synchronisationsloser Bildungsmechanismus für eindeutige applikationsseitige "Stream-Namen"; dieser Mechanismus unterstützt insbesondere das Konzept der Serienmaschinen.

Dabei besteht zwischen den applikations-seitigen "Stream-Namen" und den TSN-seitigen "Stream-IDs" die in Figur 2 stark vereinfacht illustrierte Abhängigkeit. In der TSN Application Plane (Anwendungsebene), 201, wird der Stream-Name als Fully Qualified Domain Name (FQDN) als vollständiger Name einer Domain verwendet. Dieser ergibt sich durch Mapping, 200, aus der 64 bit langen Stream-Id, 101.

Hilfreich für diese Zweiteilung ist es wenn Stream-Namen so konstruiert sind, dass sie sich dezentral in Anwendungen erzeugt lassen. Um auf dieser Ebene eine Mangelverwaltung (wie oben beschrieben) zu vermeiden, die immer eine engen Abgleich der Belegung bedingt, werden hierbei bewusst lange Namen (Schlüssel) benutzt. Da diese langen Namen aber nur in den einzelnen Geräten einer automatisierungstechnischen TSN-Applikation benötigt werden, nicht jedoch in den einzelnen TSN Switches, steht der benötigte Speicherplatz für das Hantieren weniger, dafür längerer Namen (Schlüssel) zur Verfügung.

TSN-Applikationen arbeiten also mit langen Namen, wobei der Namensraum bewusst nur dünn belegt ist um Kollisionen durch eine hierarchische Namenswahl elegant zu vermeiden, ohne dass dazu eine einzige zentrale Verwaltungsinstanz nötig ist. Dieses Prinzip ist beispielsweise aus dem Domain Name System (DNS) bekannt, aber auch aus hierarchischen Programm-Paketnamen (wie beispielsweise bei Java, Python, ...).

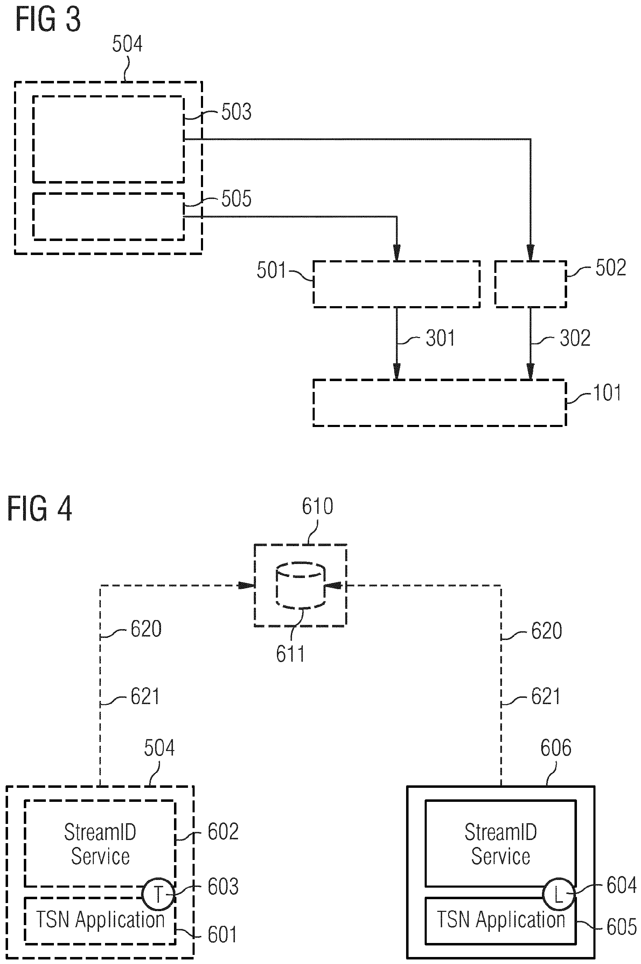

Die Control Plane von TSN arbeitet hingegen mit kurzen und damit Speicher-optimierten "Stream-IDs", die von TSN automatisch in alle beteiligte TSN-Switches repliziert werden.
1. (Dezentraler) Zuteilungsmechanismus für Stream-IDs
   In Figur 3 zeigt eine schematische Darstellung der Verwendung von Stream IDs durch einen Stream End Manager, 503. Die in der Control Plane von TSN verwendeten Stream-Ids, 101, sind aus Sicht von TSN zunächst einmal einfach nur 64bit lange Bitstrings.
   Es ist bereits bekannt, die 64bit langen Stream-Ids, 101, aus Sicht von TSN-Applikationen zu strukturieren:
   - in eine 48bit MAC-Adresse, 501, und
   - eine 16bit große "UniqueID", 502, auch als Stream End ID/SEID bezeichnet. Sie dient zur Unterscheidung der einzelnen Talker innerhalb einer einzelnen Endstation, 504.
   Es wird speziell die Unicast Station MAC-48, 505, als 48bit MAC-Adresse benutzt: die Unicast Station MAC-48 ist ein dezentrales, geräteeindeutiges Merkmal, so dass die Notwendigkeit für einen zentralen Stream-ID Belegungsmechanismus entfällt.
   Die "UniqueID" beziehungsweise die Stream End ID (SEID), 502, ist erforderlich, um mehr als einen TSN Stream (Talker) pro End Station, 504, eindeutig unterscheiden zu können. Die Stream End Ids, 502, werden in einem neuartigen Stream End Manager (SEM), 503, lokal direkt in der End Station, 504, verwaltet.
   Der Stream End Manager 503 bietet dabei die folgenden Operationen:
   - ALLOCATE: Zuteilung einer neuen, bislang lokal unbenutzten 16bit langen Stream End ID SEID;
   - RELEASE: Freigeben einer zugeteilten 16bit SEID.
   Diese Architektur 504, 503, 505, erlaubt es somit TSN-Applikationen, eindeutige TSN Stream IDs dezentral zu erzeugen. Ein spezielles Planungswerkzeug oder ein SDN (Software Defined Networking)-Controller sind hingegen nicht erforderlich. Insbesondere können damit TSN-Applikationen jederzeit ad-hoc eindeutige Stream IDs generieren.
2a. Registrierungs- und Nachschlage-Mechanismus mit DNS (Domain Name System), ist auch dargestellt in Figur 4.

Aus der IEEE 1722 ist das "MAC Address Acquisition Protocol" bekannt, (MAAP, http://www.ieee802.org/1/files/public/docs2008/avb-dolsen-1722-maap-1108.pdf), es definiert ein dezentrales Peer-to-Peer System.
Ein Peer wählt zunächst zufällig lokal eine MAC-Adresse bzw. einen MAC-Adressblock aus. Diese(n) lässt er dann im Netz auf Kollisionen überprüfen (MAAP PROBE). Erhebt innerhalb einer bestimmten Zeit kein anderer Kommunikationspartner (Peer) Einspruch (in Form eines MAAP DEFEND), dann gilt die MAC-Adresse (bzw. der MAC-Adressblock) als frei und der Peer teilt die aktive Nutzung mittels MAAP ANNOUNCE mit.

MAAC arbeitet dabei rein auf der Ebene von MAC-Adressen.
Es existiert keine Lookup-Funktion für diese MAC-Adressen. Wurde eine MAC-Adresse erfolgreich allokiert (reserviert), dann teilt dies die/der Reservierende den anderen Netzteilnehmern mit. Diese können damit die Belegung lernen, ebenso wie die MAC-Adresse des Belegenden.
Eine symbolische Adressierungskomponente fehlt bei MAAP hingegen.

Eine TSN-Applikation, 601, ist über mehrere Netzwerkteilnehmer (End Stations, 504) verteilt. Die End-Station 504 stellt in diesem Beispiel den Sender / Talker T dar, die Endstation 606 den Empfänger / Listener L. Damit die einzelnen Applikationsteile 601, 605 sich mit einen gemeinsamen TSN Stream mit der gleichen Stream ID verbinden können, müssen alle Teile 601, 605 das Wissen über die gemeinsame Stream ID besitzen.

Dazu wird hier vorläufig angenommen, dass alle Applikationsteile 601 den gleichen Stream-Namen (201) kennen; wie die Stream-Namen in die Applikationsteile gelangen ist Gegenstand des nachfolgenden Abschnitts.
Ein neuartiges DNS-Informationsmodell (611) bietet dabei auf Basis des standardisierten DNS Dienstes (610) den End-Stationen (504) Zugriff auf die allokierten Stream-IDs (101). Dazu erfolgt die Abbildung von Stream Namen (201) auf Stream IDs (101) wie folgt:
Es handelt sich hierbei um ein Beispiel, welches nicht einschränkend zu verstehen ist.

Stream Name - der sogenannte DNS Owner Name (RFC 1034,
RFC 1035) entspricht dem TSN Stream Name.
TXT RR "tsnsid=xxxx" - die TSN Stream ID "xxxx" ist hierbei textuell im Base64-Format hinterlegt.
Im TSN-Stream-Modell ist die Stromrichtung immer gerichtet; die Sendeseite wird hierbei als "Talker" (603) bezeichnet, die Empfangsseite als "Listener" (604). Dazu definiert TSN zwei Stromtopologien:
1. ein Talker sendet an viele Listener gleichzeitig;
2. viele Listener senden an einen Talker gleichzeitig.

Das hier beschriebene Verfahren ist bewusst unabhängig von den Strom-Endpunkt-Rollen Talker/Listener gestaltet.
Dazu besitzt jede TSN-Endstation 504 mit TSN-Applikationen 601 die Dienste StreamIDServices 602 (SIS). Der SIS 602 bietet dabei zu den TSN-Applikationen hin lediglich den Dienst "LOOKUP(Stream Name)" an, der die dazugehörige Stream ID liefert.

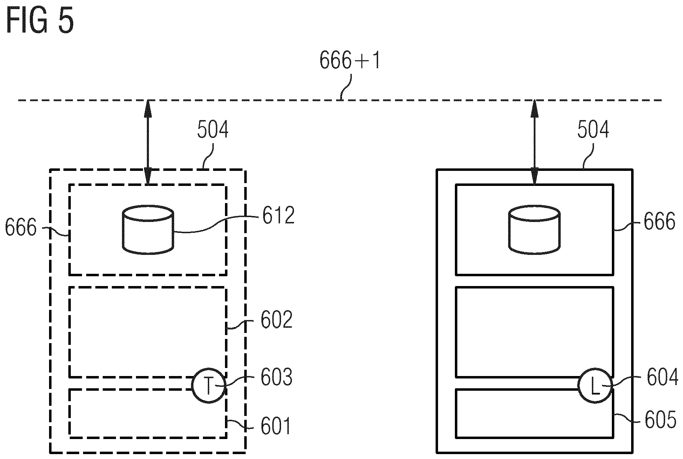

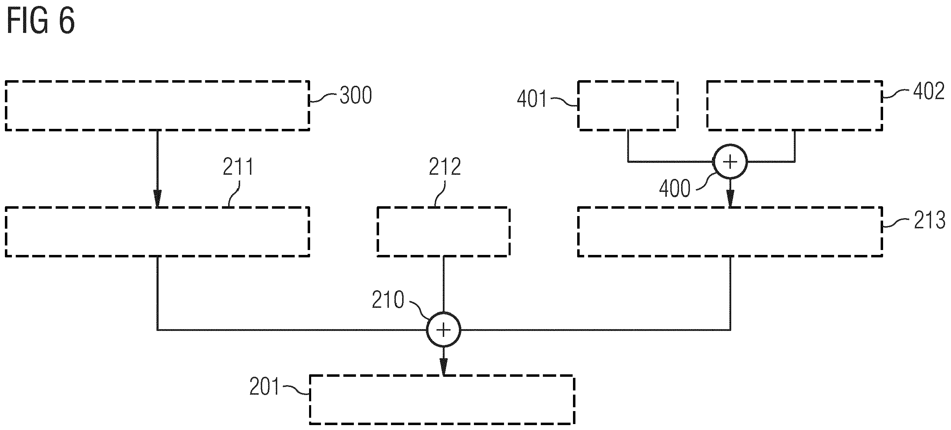

Der LOOKUP-Dienst SIS 602 arbeitet intern wie folgt (vergleiche Figur 3):
1. Probehalber Zuteilung einer neuen, eindeutigen Stream-ID 101 mittels (SEM) ALLOCATE Operation auf dem lokalen SEM 503.
2a. Bedingte DNS UPDATE Operation 620, mit dem Ziel, den Stream-ID TXT RR an demjenigen DNS-Knoten zu aktualisieren, dessen DNS Owner Name dem im (SIS) LOOKUP angegebenen Stream Name 201 entspricht. Die Nebenbedingung des DNS UPDATE ist hierbei, dass noch kein TXT RR am TSN DNS-Knoten existiert.
   Bei Erfolg des bedingten DNS UPDATEs - wobei als "Nebeneffekt" die probehalber zugewiesene Stream-ID gleich atomar im DNS registriert wurde ist das Ergebnis des (SIS) LOOKUP Dienstes die zuvor probehalber zugewiesene Stream-ID.
   Bei Misserfolg des bedingten DNS UPDATEs werden folgende Schritte durchgeführt:
   i. Rückgabe der probehalber belegten Stream-ID.
   ii. DNS QUERY Operation 621 nach TXT RRs, wobei der DNS Owner Name wiederum dem im (SIS) LOOKUP angegebenen Stream Name 201 entspricht.
   iii. das Ergebnis des (SIS) LOOKUP Dienstes ist die im TXT RR mit "tsnid=xxxx" hinterlegte (Base64-kodierte) TSN Stream ID.
2b. Alternative Ausgestaltung: Registrierungs- und Nachschlage-Mechanismus mit mDNS (Multicast DNS):
   Diese Ausgestaltungsvariante 2b, welche beispielhaft in der Figur 5 dargestellt ist, unterscheidet sich insbesondere von der zuvor beschriebenen Variante 2a durch den Einsatz des dezentralen Peer-to-Peer Dienstes mDNS (RFC 6762) anstatt von DNS. Dazu besitzt jede End Station 504 einen mDNS Service 666 (bzw. mDNS Peer). Gemäß des mDNS Protokolls (RFC 6762) fragen die einzelnen mDNS Service-Instanzen Informationen untereinander ab oder gleichen sie bei Bedarf ab.
   Das bisherige TSN Stream Informationsmodell 611 ändert sich nur geringfügig zum mDNS TSN Stream Informationsmodell 612: der DNS Owner Name des Stream Names erhält zusätzlich noch, sofern nicht bereits explizit vergeben, die mDNS-typische Top Level Domain "local." angefügt.
3. (Dezentraler) Bildungsmechanismus für Stream-Namen, vergleiche auch Figur 6:
   Ein Stream Name Construction Service (SNCS) wird aufgerufen, der sich in jeder End Station 504 mit TSN-Applikationen 601 befindet. Technisch kann der SNCS als Teil des SIS 602 ausgeführt sein.
Der SNCS erzeugt 210 im laufenden Betrieb eines TSN Netzwerkteilnehmers eindeutige hierarchische Stream Names 201 entsprechend der oben grafisch dargestellten Regeln:
- der Stream-Name 201 (DNS FQDN-konform) wird im laufenden Betrieb 210 aus den folgenden drei Elementen durch einfaches Verketten der Strings gebildet, unter Berücksichtigung der Syntax-Regeln für das Verketten von DNS-Teilstrings:
   1. dem Local Stream Name 211 - dieser kann beispielsweise sein:
      ▪ ein vorab bekannter Projekt-Stream-Name 300, beispielsweise "ioc-iod" für einen TSN Stream von einem PNIO IOC zu seinen IODs und "iod-ioc" für den gegenläufigen zweiten TSN Stream von den IODs zum IOC.
      ▪ die ad-hoc erzeugte textuelle Repräsentation einer UUID (128-bit UUID).
   2. das für den TSN-Unternamensraum (TSN SNS) 212 speziell reservierte DNS Label "_tsn".
   3. das Applikations-Instanz-Suffix 213, das seinerseits wiederum im laufenden Betrieb 400 nach der folgenden Unterregel bestimmt wird:
      ▪ dem Gerätenamen 401 (beispielsweise Profinet Name of Station/NoS)
      ▪ einem DNS-Suffix 402, das beispielsweise per IPv6 Router Advertisements den Geräte im Netz (Zellen-Netz, ...) bekannt gegeben wird.

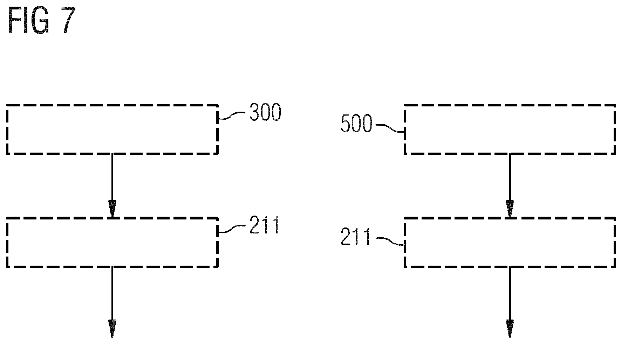

Das Verfahren des SNCS kann dabei universell von TSN-Applikationen benutzt werden. Insbesondere sind hier zu nennen:
Profinet IO, wobei hier mit vorab definierten lokalen Strom-Namen (Namensteilen) 211 wie "ioc-iod" und "iod-ioc" gearbeitet werden kann (Figur 7, linke Seite: Projekt Stream Name 300, z. B. ioc_iod, Local Stream Name 211 (PQDN).
OPC UA Pub/Sub, wobei hier wegen des ad-hoc Charakters mit dezentral generierbaren UUIDs gearbeitet werden kann, die dann über ein eigenständiges OPC UA Seitenbandprotokoll zwischen mit OPU UA Pub/Sub TSN-Teilnehmern ausgetauscht werden können. Dazu vergleiche Figur 7, rechte Seite, UUID Management and Out-of-Band-Transfer 500, Local Stream Name 211 (PQDN) (f416553c82084...)

Zu beachten ist, dass der direkte oder indirekte Einsatz von UUIDs als Strom-Namen 201 immer ein Seitenbandprotokoll erfordert, damit die konkreten Strom-Namen zwischen den TSN Stromendpunkten einer konkreten Applikationsinstanz ausgetauscht werden können.
Eine fertige Vorab-Planung ist nur dann möglich, wenn im Fall von Serienmaschinen bereits alle Maschinen vorab unveränderlich bekannt sind, so dass eindeutige Strom-Namen und auch Strom-IDs berechnet werden können. Für einen adaptiven ad-hoc Betrieb ist ein derartiges Vorgehen hingegen wenig geeignet.

Abschließend sei noch angemerkt, dass wie oben beschrieben beim Einsatz eines standardisierten DNS-Dienstes dieser DNS-Dienst das Seitenbandprotokoll universell umsetzen kann.

Zusammengefasst wird in der vorliegenden Anmeldung folgendes vorgeschlagen:
- ein Stream End Manager (SEM) in End-Stationen zur dezentralen Verwaltung von Stream-Enden,
- ein DNS TSN-Informationsmodell, das die Abbildung von TSN Stream-Namen auf TSN Stream-IDs mit Mitteln des DNS ermöglicht.
- ein Stream Information Service (SIS), der die Registrierung und das Nachschlagen von Stream IDs anhand von Stream Names durchführt.
- ein Stream Name Construction Service (SNCS) zum Bilden hierarchisch eindeutiger Stream-Namen auf der Basis von DNS FQDNs.

Das vorgeschlagene Vorgehen bietet folgende Vorteile
- flexible ad-hoc Autokonfiguration der TSN-Stream-IDs in verteilten und modularen TSNApplikationen.
- unterstützt den Serien-Maschinenbau.
- kein zentrales Planungstool für die Netzwerk-Planung erforderlich.
- keine zentrale Planung der Stream-IDs (und der Stream-Namen) erforderlich.
- dezentrales Erzeugen eindeutiger TSN Stream-IDs, so dass kein zentraler
   Belegungsmechanismus erforderlich ist.
- Mit-Verwendung eines bereits existierenden Namensdienstes (DNS, mDNS), so dass
   nicht erst ein neuer Dienst entwickelt werden muss.

## Patentansprüche

1. Verfahren zum Generieren eines eindeutigen Adressierungskenners (201) für einen Datenstrom von einer in einem Endgerät (504) laufenden Applikation (601),
in einem TSN konformen Netzwerk gemäß dem Standard IEEE 802.1 dezentral in diesem Endgerät (504), wobei
der Adressierungskenner (201) zumindest eine erste Information beinhaltet mit Bezug zur Applikation (601) und
der Adressierungskenner (201) zumindest eine zweite Information beinhaltet mit Bezug auf den Datenstrom (211), wobei
der Adressierungskenner (201) nach Generierung eine StreamID (101) zugewiesen wird und
eine Information enthaltend den Adressierungskenner (201) und die StreamID (101) an einen zentralen Adress-Verwaltungs-Knoten (610) gemeldet wird um den Adressierungskenner (201) abzufragen und zu registrieren, sofern die Kombination noch nicht vergeben war.

2. Verfahren gemäß Patentanspruch 1,
**dadurch gekennzeichnet, dass**
die erste Information mit Bezug zur Applikation (601) ein Local Stream Name ist.

3. Verfahren gemäß einem der vorherigen Patentansprüche,
**dadurch gekennzeichnet, dass**
die zweite Information mit Bezug auf den Datenstrom einen Applikations-Suffix umfasst, insbesondere einen Gerätenamen (401) und/oder einen DNS Suffix (402).

4. Verfahren gemäß einem der vorherigen Patentansprüche,
**dadurch gekennzeichnet, dass**
der Adressierungskenner (201) eine dritte Information beinhaltet mit Bezug zu dem verwendeten Standard IEEE 802.1.

5. Verfahren gemäß einem der vorherigen Patentansprüche,
**dadurch gekennzeichnet, dass**
nach Meldung der Information enthaltend den Adressierungskenner (201) und die StreamID (101) an den zentralen Adress-Verwaltungs-Knoten (610) um den Adressierungskenner (201) abzufragen eine Antwort erfolgt, die anzeigt, dass die angefrage Kombination bereits vergeben war, wobei die von dem zentralen Adress-Verwaltungs-Knoten (610) versendete Antwort eine gültige StreamID zurück sendet.

6. Verfahren gemäß einem der vorherigen Patentansprüche,
**dadurch gekennzeichnet, dass**
der zentrale Adress-Verwaltungs-Knoten (610) als Domain Name Server ausgeprägt ist, oder als mDNS gemäß RFC 6762.

7. Vorrichtung (504) geeignet zur Generierung eines eindeutigen Adressierungskenners (602) für einen Datenstrom von einer darauf laufenden Applikation (601),
in einem TSN konformen Netzwerk gemäß dem Standard IEEE 802.1 wobei der Adressierungskenner (201) zumindest eine erste Information beinhaltet mit Bezug zur Applikation (601) und
der Adressierungskenner (201) zumindest eine zweite Information beinhaltet mit Bezug auf den Datenstrom (211), mit einem Generator (602) für den Adressierungskenner (201) der eine StreamID (101) zugeweist wird und
einer Kommunikationsschnittstelle (666) zum Senden einer Information enthaltend den Adressierungskenner (201) und die StreamID (101) an einen zentralen Adress-Verwaltungs-Knoten (610) welche den Adressierungskenner (201) abfragt und registriert, sofern die Kombination noch nicht vergeben war.

8. Vorrichtung gemäß Patentanspruch 7,
**dadurch gekennzeichnet, dass**
die erste Information mit Bezug zur Applikation (601) ein Local Stream Name ist.

9. Vorrichtung gemäß einem der vorherigen Patentansprüche 7 oder 8,
**dadurch gekennzeichnet, dass**
die zweite Information mit Bezug auf den Datenstrom einen Applikations-Suffix umfasst, insbesondere einen Gerätenamen (401) und/oder einen DNS Suffix (402).

10. Vorrichtung gemäß einem der vorherigen Patentansprüche 7 bis 9,
**dadurch gekennzeichnet, dass**
der Adressierungskenner (201) eine dritte Information beinhaltet mit Bezug zu dem verwendeten Standard IEEE 802.1.

11. Vorrichtung gemäß einem der vorherigen Patentansprüche 7 bis 10,
**dadurch gekennzeichnet, dass**
die Kommunikationsschnittstelle (666) eingerichtet und geeignet ist, eine Antwort vom zentralen Adress-Verwaltungs-Knoten (610) zu empfangen, wobei
nach Meldung der Information enthaltend den Adressierungskenner (201) und die StreamID (101) an den zentralen Adress-Verwaltungs-Knoten (610) zur Abfrage des Adressierungskenners (201) wobei
die Antwort anzeigt, dass die angefrage Kombination bereits vergeben war, wobei
die von dem zentralen Adress-Verwaltungs-Knoten (610) versendete Antwort eine gültige StreamID enthält.

12. Vorrichtung gemäß einem der vorherigen Patentansprüche 7 bis 11,
**dadurch gekennzeichnet, dass**
der zentrale Adress-Verwaltungs-Knoten (610) als Domain Name Server ausgeprägt ist, oder als mDNS gemäß RFC 6762.
